# EUROPEAN PATENT APPLICATION

(11) **EP 4 800 468 A1**
(43) Date of publication of application: **02.09.2026**
(21) Application number: 24882383.3
(22) Date of filing: 22.10.2024
(51) Int. Cl.: G02F 1/1337, G02F 1/13, G02F 1/1334

(54) **LIGHT CONTROL SHEET, LIGHT CONTROL DEVICE AND METHOD FOR PRODUCING LIGHT CONTROL SHEET**

(30) Priority: 25.10.2023 JP 2023183398
(71) Applicant: Toppan Holdings Inc., Tokyo 110-0016 (JP)
(72) Inventor: MORINAGA Kaori, Tokyo 110-0016 (JP)
(74) Representative: TBK
(86) International application number: PCT/JP2024/037597
(87) International publication number: WO 2025/089272

(57) **Abstract**

A light control sheet includes a light control layer containing a liquid crystal composition, a pair of alignment layers sandwiching the light control layer, and a pair of transparent electrode layers sandwiching the light control layer and the pair of alignment layers. The alignment layers have a thermal weight loss rate of 4% or less when the alignment layer are heated at 130°C for 30 minutes. The alignment layers contain a polymer compound having a skeleton composed of polyimide or a polyimide precursor. The alignment layers include a structure produced by reacting a polyamic acid with a compound having at least one functional group selected from the group consisting of an epoxy group, a carbodiimide group and oxazoline group.

## Description

### [Technical Field]

The present disclosure relates to light control sheets, light control devices and methods of producing light control sheets.

### [Background Art]

A light control sheet includes a light control layer containing a liquid crystal composition, and a pair of electrode sheets that sandwich the light control layer. The electrode sheets include a transparent electrode layer that faces the light control layer, and a transparent support layer disposed to support the side of the transparent electrode layer opposite to that faces the light control layer. A driving voltage is applied across the transparent electrode layers of the pair of electrode sheets. Since the alignment state of the liquid crystal compounds in the light control layer changes in response to whether the driving voltage is applied, the light control sheet can switch between the transparent state in which light passes through the light control layer and the opaque state in which light transmission through the light control layer is suppressed by scattering or the like.

The light control sheet is mounted on a transparent substrate such as a glass substrate. During this mounting, high temperature may be applied to the light control sheet. For example, in the interlayer film type mounting technique, the light control sheet is sandwiched between two transparent substrates, and then the transparent substrates are heated to fix the light control sheet between the transparent substrates.

When high temperature is applied to the light control sheet, impurities are generated in the layers constituting the light control sheet, and the impurities may enter the light control layer, resulting in deterioration in properties such as the reliability of the alignment control of the liquid crystal compound in the light control layer. In order to address this problem, the light control sheet of PTL 1 includes a surface treatment layer having barrier properties on the surface of the transparent support layer. This prevents low molecular weight impurities generated in the resin transparent support layer by hydrolysis or the like from entering the light control layer.

### [Citation List]

### [Patent Literature]

PTL 1: JP 6447757 B

### [Summary of Invention]

### [Technical Problem]

Known structures for light control sheets include a structure in which an alignment layer is disposed between a light control layer and a transparent electrode layer. The alignment layer has a function of controlling the alignment of the liquid crystal compound when no driving voltage is applied. When high temperature is applied to the light control sheet, impurities may be generated in the alignment layer. For example, when the polymer compound constituting the alignment layer includes a polyimide skeleton generated from a polyamic acid, unreacted polyamic acid contained in the alignment layer reacts upon heating, generating H₂O, which is a low molecular weight impurity.

Unlike PTL 1, which targets impurities generated in the transparent support layer, the formation of a surface treatment layer cannot be used to solve the problem caused by impurities generated in the alignment layer. This is because forming a surface treatment layer on the surface of the alignment layer impairs the function of the alignment layer to control the alignment of the liquid crystal compound.

Therefore, measures are required to suppress the deterioration in properties of the light control layer caused by impurities generated in the alignment layer.

### [Solution to Problem]

An aspect of a light control sheet includes: a light control layer containing a liquid crystal composition; a pair of alignment layers sandwiching the light control layer; and a pair of transparent electrode layers sandwiching the light control layer and the pair of alignment layers, wherein the alignment layers have a thermal weight loss rate of 4% or less when the alignment layers are heated at 130°C for 30 minutes.

An aspect of a light control device includes: the light control sheet; and a control unit that controls application of a driving voltage to the light control sheet, wherein a haze of the light control sheet is changed by application of the driving voltage.

An aspect of a method of producing a light control sheet includes: forming a first alignment layer on a first transparent electrode layer supported by a first transparent support layer; forming a second alignment layer on a second transparent electrode layer supported by a second transparent support layer; and forming a light control layer containing a liquid crystal composition between the first alignment layer and the second alignment layer, wherein the first alignment layer and the second alignment layer are formed so as to have a thermal weight loss rate of 4% or less when the alignment layers are heated at 130°C for 30 minutes.

### [Brief Description of Drawings]

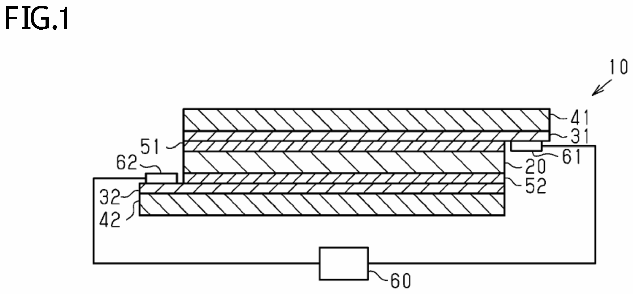

Fig. 1 is a diagram illustrating a configuration of a light control sheet and a light control device according to an embodiment.

### [Description of Embodiments]

With reference to the drawings, an embodiment of a light control sheet, a light control device and a method of producing a light control sheet will be described. It should be noted that the term "at least one of A and B" as used herein refers to "only A, only B, or both A and B".

### [Configuration of Light Control Sheet and Light Control Device]

Referring to Fig. 1, an overall configuration of a light control sheet and a light control device will be described.

As shown in Fig. 1, a light control sheet 10 includes a light control layer 20, a pair of transparent electrode layers, i.e., a first transparent electrode layer 31 and a second transparent electrode layer 32, a pair of transparent support layers, i.e., a first transparent support layer 41 and a second transparent support layer 42, and a pair of alignment layers, i.e., a first alignment layer 51 and a second alignment layer 52.

The light control sheet 20 is disposed between the first transparent electrode layer 31 and the second transparent electrode layer 32. The first transparent support layer 41 supports the first transparent electrode layer 31 on a side of the first transparent electrode layer 31 opposite to that facing the light control layer 20, and the second transparent support layer 42 supports the second transparent electrode layer 32 on a side of the second transparent electrode layer 32 opposite to that facing the light control layer 20.

Further, the first alignment layer 51 is disposed between the light control layer 20 and the first transparent electrode layer 31, and is in contact with the light control layer 20 and the first transparent electrode layer 31. The second alignment layer 52 is disposed between the light control layer 20 and the second transparent electrode layer 32, and is in contact with the light control layer 20 and the second transparent electrode layer 32. That is, a pair of alignment layers sandwich the light control layer 20, and a pair of transparent electrode layers sandwich the light control layer 20 and the pair of alignment layers.

The light control layer 20 includes a transparent polymer layer and a liquid crystal composition. The transparent polymer layer includes a plurality of voids, and the liquid crystal composition fills the voids. The shape of the voids may be spherical, ellipsoidal or irregular. The liquid crystal composition contains a liquid crystal compound having negative dielectric anisotropy. That is, the dielectric constant of the liquid crystal compound in the minor axis direction is higher than the dielectric constant in the major axis direction.

The light control layer 20 may have a liquid crystal holding structure of any of a polymer network type, a polymer dispersed type and a capsule type. A polymer network type light control layer 20 has a polymer network having a three-dimensional mesh form. The polymer network is an example of the transparent polymer layer, and holds a liquid crystal composition in the voids of the interconnected network in the polymer network. A polymer dispersed type light control layer 20 has a transparent polymer layer that partitions a large number of isolated voids, and holds a liquid crystal composition in the voids dispersed in the transparent polymer layer. A capsule type light control layer 20 holds a liquid crystal composition in the voids in capsules dispersed in the transparent polymer layer.

Each of the first transparent electrode layer 31 and the second transparent electrode layer 32 is conductive and transparent to light in the visible region. The materials of the transparent electrode layers 31 and 32 may be, for example, indium tin oxide, fluorine-doped tin oxide, tin oxide, zinc oxide, carbon nanotubes, poly(3,4-ethylenedioxythiophene), or silver alloys.

Each of the first transparent support layer 41 and the second transparent support layer 42 is a substrate transparent to light in the visible region. The materials of the transparent support layers 41 and 42 may be, for example, synthetic resins or inorganic compounds. Examples of the synthetic resins include polyesters such as polyethylene terephthalate and polyethylene naphthalate, polyacrylates such as polymethyl methacrylate, polycarbonates, polyolefins, and the like. Examples of the inorganic compounds include silicon dioxide, silicon oxynitride, silicon nitride, and the like.

The surface of the transparent support layers 41 and 42 may have a surface treatment layer having barrier properties for suppressing permeation of low molecular weight compounds. The surface treatment layer may be, for example, a photocurable resin film, a thermosetting resin film or an inorganic oxide film.

Each of the first alignment layer 51 and the second alignment layer 52 is a vertical alignment layer transparent to light in the visible region. The first alignment layer 51 aligns the liquid crystal compound contained in the light control layer 20 so that the major axis direction of the liquid crystal compound is perpendicular to the surface of the first alignment layer 51 in contact with the light control layer 20. The second alignment layer 52 aligns the liquid crystal compound contained in the light control layer 20 so that the major axis direction of the liquid crystal compound is perpendicular to the surface of the second alignment layer 52 in contact with the light control layer 20.

A first connecting section 61 is disposed at the edge of the first transparent electrode layer 31 to electrically connect the first transparent electrode layer 31 to a control unit 60 that generates a voltage for driving the light control sheet 10. A second connecting section 62 is disposed at the edge of the second transparent electrode layer 32 to electrically connect the second transparent electrode layer 32 to the control unit 60.

Each of the first connecting section 61 and the second connecting section 62 may include, for example, a conductive adhesive layer and a wiring board. The conductive adhesive layer may be formed of, for example, an anisotropic conductive film (ACF), an anisotropic conductive paste (ACP), an isotropic conductive film (ICF) or an isotropic conductive paste (ICP). The wiring board may be, for example, a flexible printed circuit (FPC).

Alternatively, each of the first connecting section 61 and the second connecting section 62 may have a structure in which a conductive material such as a conductive tape and a conductive wire are joined by soldering.

The transparent electrode layers 31 and 32 are connected to the control unit 60 via wiring extending from the connecting sections 61 and 62, respectively. The control unit 60 applies a driving voltage, which is a voltage for changing the alignment state of the liquid crystal compound, to the transparent electrode layers 31 and 32 via the connecting sections 61 and 62, respectively. The control unit 60 controls the potential difference between the transparent electrode layers 31 and 32 through control of whether a voltage is applied and control of the magnitude of the applied voltage. The light control sheet 10, the control unit 60 and the connecting sections 61 and 62 constitute the light control device.

When no driving voltage is applied to the transparent electrode layers 31 and 32, the liquid crystal compound is aligned perpendicular to the surface of the alignment layers 51 and 52, that is, so that the major axis direction is aligned in the thickness direction of the light control layer 20, by the alignment regulating force of the alignment layers 51 and 52. As a result, light can easily pass through the light control layer 20. Therefore, when no driving voltage is applied, the light control sheet 10 is in a transparent state.

When a driving voltage is applied to the transparent electrode layers 31 and 32, the liquid crystal compound is aligned perpendicular to the direction of the electric field, that is, so that the major axis direction is parallel to the surface of the alignment layers 51 and 52. As a result, light incident on the light control sheet 10 is more likely to be scattered in the light control layer 20. Therefore, when a driving voltage is applied, the light control sheet 10 is in an opaque state and appears turbid. In the opaque state, the light control sheet 10 has a higher haze than that in the transparent state.

As described above, the transparent state and the opaque state of the light control sheet 10 are switched by switching application and release of the driving voltage.

The light control sheet 10 is attached to a transparent substrate, which is an object to be attached. The transparent substrate may be a glass substrate or a resin substrate. Examples of the transparent substrate include window glass mounted on mobile objects such as vehicles and aircraft, window glass installed in buildings, and partitions placed inside the car or indoors. The surface to which the light control sheet 10 is attached may be flat or curved. The light control sheet 10 may be sandwiched between two transparent substrates. Further, the light control sheet 10 in the opaque state may be used as a screen onto which images are projected.

### [Materials for Light Control Layer and Alignment Layer]

The materials for the light control layer 20 and the alignment layers 51 and 52 will be described in detail.

The transparent polymer layer included in the light control layer 20 is a cured photopolymerizable compound. The photopolymerizable compound is compatible with the liquid crystal composition. The photopolymerizable compound may be a UV-curable compound or an electron beam-curable compound. When the photopolymerizable compound is a UV-curable compound, the controllability of the size of the voids in the transparent polymer layer can be improved. The photopolymerizable compound may be a single type of polymerizable compound or may contain two or more types of polymerizable compounds.

An example of the UV-curable compound contains polymerizable unsaturated bonds at the ends of the molecular structure. Other examples of the UV-curable compound contain polymerizable unsaturated bonds at sites other than the ends of the molecular structure. The UV-curable compound may be, for example, at least one selected from the group consisting of acrylate compounds, methacrylate compounds, thiol compounds, styrene compounds, and oligomers of these compounds. The acrylate compounds include diacrylate compounds, triacrylate compounds and tetraacrylate compounds. Examples of the acrylate compounds include butyl ethyl acrylate, ethyl hexyl acrylate and cyclohexyl acrylate. Examples of the methacrylate compounds include dimethacrylate compounds, trimethacrylate compounds and tetramethacrylate compounds. Examples of the methacrylate compounds include N,N-dimethylaminoethyl methacrylate, phenoxyethyl methacrylate, methoxyethyl methacrylate and tetrahydrofurfuryl methacrylate. Examples of the thiol compounds include 1,3-propanedithiol and 1,6-hexanedithiol. Examples of the styrene compounds include styrene and methyl styrene.

The liquid crystal composition contained in the light control layer 20 contains a liquid crystal compound having negative dielectric anisotropy. The liquid crystal compound is a nonpolymerizable compound. The liquid crystal compound contained in the liquid crystal composition may be a single type or may be two or more types.

The liquid crystal compound may be at least one selected from the group consisting of Schiff base-based, azo-based, azoxy-based, biphenyl-based, terphenyl-based, benzoate-based, tolan-based, pyrimidine-based, pyridazine-based, cyclohexanecarboxylate-based, phenylcyclohexane-based, biphenylcyclohexane-based, dicyanobenzene-based, naphthalenebased and dioxane-based compounds.

The liquid crystal compound may be, for example, a compound represented by the following structural formulae (1-1) to (1-11). The liquid crystal composition may contain only a single type of compound selected from those represented by the following structural formulae (1-1) to (1-11), or may contain two or more types. In the structural formulae (1-1) to (1-11), R¹ and R² are each independently an alkyl group having 1 to 12 carbon atoms, an alkoxy group having 1 to 12 carbon atoms, an alkenyl group having 2 to 12 carbon atoms, an alkenyloxy group having 2 to 12 carbon atoms, or an alkyl group having 1 to 12 carbon atoms in which at least one hydrogen is replaced with fluorine or chlorine.

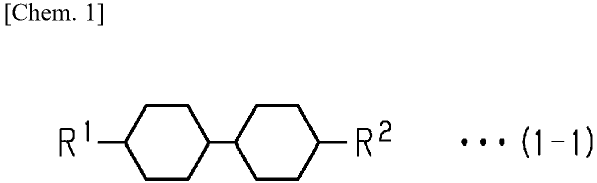

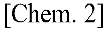

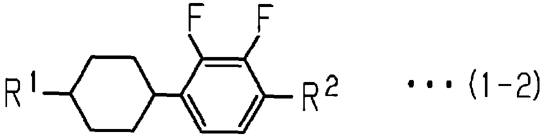

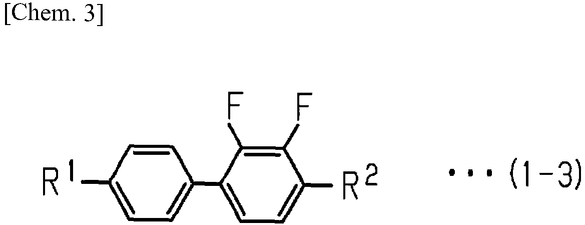

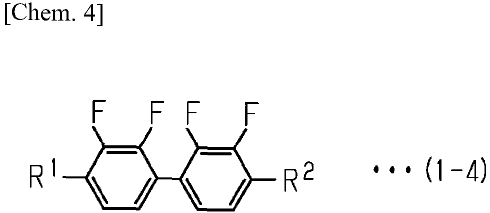

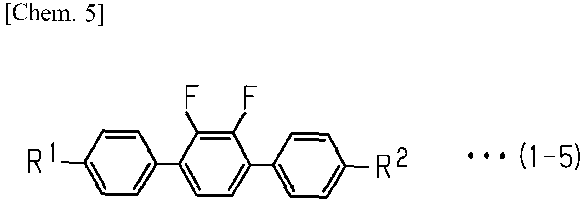

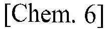

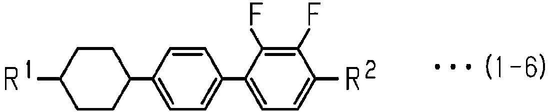

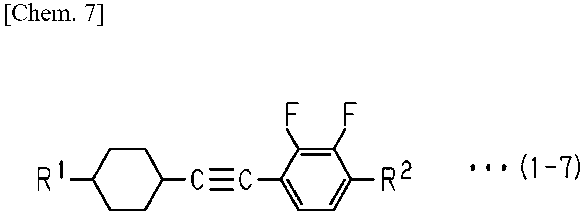

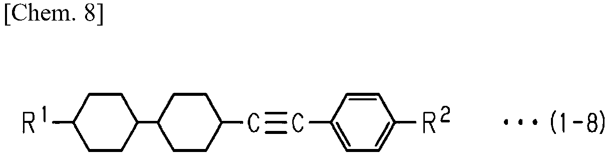

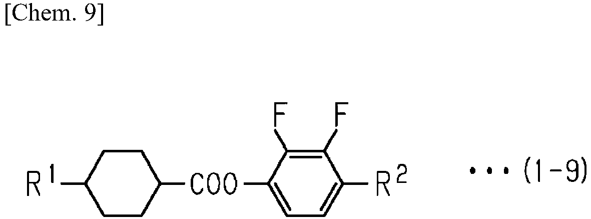

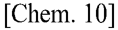

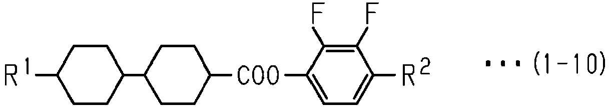

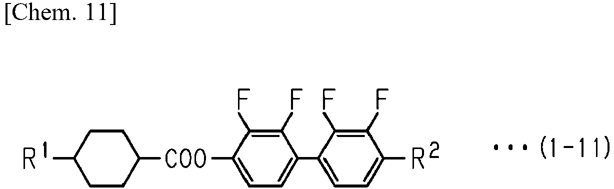

If the liquid crystal compound is a compound represented by the above structural formulae (1-1) to (1-11), the alignment can be accurately controlled by the alignment layers 51 and 52 containing a polymer compound described below.

The ratio of the transparent polymer layer to the transparent polymer layer and the liquid crystal composition is preferably 20 mass% or greater and 80 mass% or less, and more preferably 40 mass% or greater and 60 mass% or less. When the ratio of the transparent polymer layer is within the above range, the size of the voids formed in the transparent polymer layer is appropriately ensured. Within the above range, the greater the ratio of the transparent polymer layer, the higher the mechanical strength of the transparent polymer layer can be, and the smaller the ratio of the transparent polymer layer, the lower the driving voltage of the light control sheet 10 can be.

The liquid crystal composition may contain, in addition to the liquid crystal compound, a dichroic dye, a viscosity reducing agent, a defoamer, an antioxidant, a weathering agent, and the like. When the liquid crystal composition contains a dichroic dye, the light control sheet in the opaque state can have a color other than white. Examples of the weathering agent include UV absorbers and light stabilizers. Further, the light control layer 20 may contain, in addition to the transparent polymer layer and the liquid crystal composition, spacers that define the thickness of the light control layer 20. The spacers may be, for example, bead spacers or photospacers, and are dispersed in the transparent polymer layer. The thickness of the light control layer 20 may be, for example, 10 µm or greater and 30 µm or less.

The alignment layers 51 and 52 contain a polymer compound. Examples of the polymer compound include a polyimide polymer, polyamide polymer, acrylic polymer, polyester polymer and polysiloxane polymer. In particular, the main chain of the polymer compound preferably has a skeleton composed of polyimide or a polyimide precursor. The skeleton composed of the polyimide precursor has a structure represented by the following general formula (2).

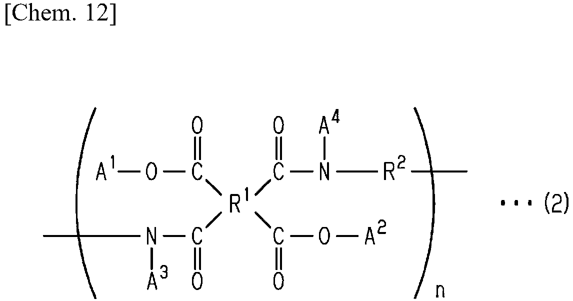

In the above general formula (2), R¹ represents a tetravalent organic group, R² represents a divalent organic group, A¹ and A² each independently represent a hydrogen atom or an alkyl group having 1 to 8 carbon atoms, A³ and A⁴ each independently represent any of a hydrogen atom, an alkyl group having 1 to 5 carbon atoms and an acetyl group having 1 to 5 carbon atoms, and n represents a positive integer. An example of the polyimide precursor is a polyamic acid.

When the alignment layers 51 and 52 contain a polymer compound having a skeleton composed of polyimide or a polyimide precursor, particularly when the polymer compound is a compound produced from a polyamic acid, the polymer compound preferably includes a structure produced by reacting a polyamic acid with a compound having at least one functional group selected from the group consisting of an epoxy group, a carbodiimide group and oxazoline group.

Hereinafter, a compound having at least one functional group selected from the group consisting of an epoxy group, a carbodiimide group and oxazoline group will be referred to as a "specific compound," and a polymer compound having a structure produced by reacting a polyamic acid with the specific compound will be referred to as a "specific polymer compound."

The specific compound may be a low molecular weight compound or a polymer compound having the above functional group.

Among the specific compounds having an epoxy group, there are various low molecular weight compounds, but the use of a compound having a functional group that reacts with the material of the light control layer 20 enhances the adhesion between the alignment layers 51 and 52 and the light control layer 20, and is particularly preferred. Examples of the specific compounds include glycidyl acrylate, glycidyl methacrylate, (3,4-epoxycyclohexyl) methyl acrylate, allyl glycidyl ether, 1,2-epoxy-5-hexene, 1,2-epoxy-9-decene, vinylethylene oxide, and 4-vinyl-1,2-epoxycyclohexane.

Among the specific compounds having an epoxy group, examples of the polymer compound include copolymers containing glycidyl methacrylate. Examples of the commercially available product include Marproof (manufactured by NOF Corporation) and ARUFON UG-4000 series (manufactured by Toagosei Co., Ltd.).

Among the specific compounds having an oxazoline group, examples of the low molecular weight compound include 2-alkyl-2-oxazoline, 2-phenyl-2-oxazoline, 2,2'-bis(2-oxazoline) and 2,2'-(1,4-phenylene)bis(2-oxazoline).

Among the specific compounds having an oxazoline group, the polymer compound is obtained by copolymerization of an oxazoline-containing monomer. Examples of the commercially available product include Epocros (manufactured by Nippon Shokubai Co., Ltd.).

Among the specific compounds having a carbodiimide group, examples of the low molecular weight compound include N,N'-diisopropylcarbodiimide, N,N'-dicyclohexylcarbodiimide, N,N'-di-tert-butylcarbodiimide and 1-(3-dimethylaminopropyl)-3-ethylcarbodiimide.

Among the specific compounds having a carbodiimide group, the polymer compound is obtained by polycondensation of diisocyanate. Examples of the commercially available product include Carbodilite (manufactured by Nisshinbo Chemical Inc.).

When the alignment layers 51 and 52 contain a specific polymer compound, the alignment layers 51 and 52 may contain an unreacted specific compound. The specific compound contained in the alignment layers 51 and 52 may be a single type or may be two or more types.

The specific polymer compound can be produced by using a known method for producing polyimide. Specifically, a polyamic acid is produced by polymerizing a diamine compound with a tetracarboxylic acid, and the polyamic acid is then dehydrated and cyclized to cause an imidization reaction, thereby obtaining a polymer compound having a polyimide skeleton. At this time, by adding the specific compound to the polyamic acid to promote the imidization reaction, the specific polymer compound is obtained.

### [Method of Producing Light Control Sheet]

A method of producing the light control sheet 10 will be described. First, a first sheet in which a first transparent electrode layer 31 is formed on a first transparent support layer 41 and a second sheet in which a second transparent electrode layer 32 is formed on a second transparent support layer 42 are prepared. The first transparent electrode layer 31 and the second transparent electrode layer 32 are formed by a known thin film formation method such as sputtering or vacuum deposition.

Next, a first alignment layer 51 is formed on the first transparent electrode layer 31, and a second alignment layer 52 is formed on the second transparent electrode layer 32. The alignment layers 51 and 52 are formed by applying an alignment layer coating liquid to form a coating film, and drying the coating film. The alignment layer coating liquid used to form the alignment layers 51 and 52 containing the specific polymer compound contains a polyamic acid, a specific compound and a solvent.

The alignment layer coating liquid can be applied by a known coating method, such as ink jetting, gravure coating, spin coating, slit coating, bar coating, flexo coating, die coating, dip coating or roll coating.

The alignment layers 51 and 52 may be fired by drying the coating film at a high temperature. The firing temperature is preferably 100°C or higher and 200°C or less.

Next, a light control layer coating liquid containing the material of the light control layer 20 is prepared and applied to form a coating film that serves as the light control layer 20 between the alignment layers 51 and 52 of the first sheet and the second sheet, respectively. The light control layer coating liquid at least contains a photopolymerizable compound, a liquid crystal composition and a polymerization initiator. Examples of the photopolymerization initiator include diketone compounds, acetophenone compounds, benzoin compounds, benzophenone compounds and thioxanthone compounds. The polymerization initiator may be a single compound or a combination of two or more compounds. Examples of the photopolymerization initiator include benzoin methyl ether, benzoin ethyl ether, benzoin isopropyl ether and cyclohexyl phenyl ketone.

In formation of a coating film, the light control layer coating liquid is applied to the alignment layer of one of the first and second sheets to form a coating film, and the other of the first and second sheets is laminated on the coating film to form a laminate in which the coating film is sandwiched between the alignment layers of the first and second sheets.

The light control layer coating liquid can be applied by a known coating method, such as drop casting, ink jetting, gravure coating, spin coating, slit coating, bar coating, flexo coating, die coating, dip coating or roll coating.

Next, the laminate is irradiated with light of a specific wavelength to proceed polymerization reaction. The light of a specific wavelength may be an electron beam or ultraviolet light. The light may be applied toward the first sheet or the second sheet, or may be applied toward both the first sheet and the second sheet. Accordingly, a polymerization reaction of the photopolymerizable compound proceeds in the coating film, and phase-separation of the liquid crystal composition occurs, thereby forming the light control layer 20.

Thus, a laminate including the light control layer 20, the alignment layers 51 and 52, the transparent electrode layers 31 and 32, and the transparent support layers 41 and 42 is formed, and external shaping or the like is performed on the laminate as necessary to form a light control sheet 10.

### [Properties of Light Control Sheet]

In the light control sheet 10, the alignment layers 51 and 52 have a thermal weight loss rate of 4% or less. The thermal weight loss rate is the ratio of the loss of the weight of the alignment layers 51 and 52 after heating to the weight of the alignment layers 51 and 52 before heating when the alignment layers 51 and 52 are heated at 130°C for 30 minutes. The thermal weight loss rate is measured using a thermogravimetric analyzer, with the alignment layers 51 and 52 cut out by disassembling the light control sheet 10 as the sample.

When the thermal weight loss rate of the alignment layers 51 and 52 is 4% or less, impurities are prevented from being released from the alignment layers 51 and 52 even when high temperature is applied to the light control sheet 10. Therefore, deterioration in properties of the light control layer 20 caused by impurities entering the light control layer 20 can be suppressed. In particular, when the light control sheet 10 is mounted between two glass substrates by an interlayer film method, which involves high-temperature heating, deterioration in properties of the light control layer 20 can be suppressed.

The relationship between the configuration of the light control sheet 10 and the thermal weight loss rate in the case where the alignment layers 51 and 52 contain the polymer compound produced from polyamic acid will be described.

The following (Formula 1) is a reaction formula showing the reaction for producing polyimide from polyamic acid. In the following (Formula 1), R¹ represents a tetravalent organic group, R² represents a divalent organic group, and n represents a positive integer. By heating the polyamic acid at high temperature, dehydration and cyclization occur in the polyamic acid to cause imidization as shown in the following (Formula 1), thereby producing polyimide.

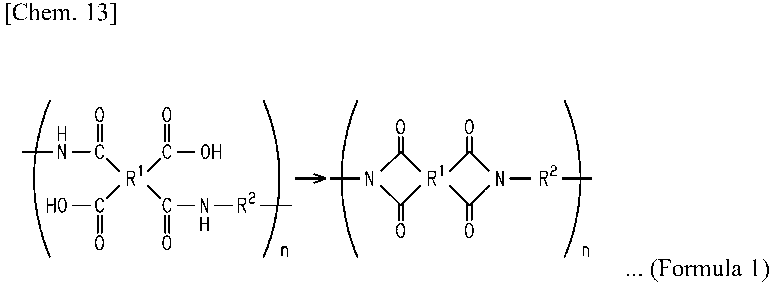

In the reaction for producing polyimide, imidization does not necessarily occur in all the repeating units of the polymer compound, and the repeating units of the polymer compound contained in the alignment layers 51 and 52 may contain repeating units of the polyamic acid in which imidization has not occurred, that is, unreacted repeating units. In particular, when a highly flexible substrate is used for the transparent support layers 41 and 42 in order to expand the application or improve the productivity, or the like, the baking temperature of the alignment layers 51 and 52 is limited to a low temperature at which thermal deformation of the transparent support layers 41 and 42 is suppressed, and therefore the imidization ratio tends to be reduced.

Then, when high temperature is applied to the produced light control sheet 10, imidization occurs in the unreacted repeating units, producing H₂O as a reaction by-product. When H₂O enters the light control layer 20, the alignment of the liquid crystal compound is disrupted, leading to deterioration in optical properties of the light control layer 20, such as haze.

In contrast, when the thermal weight loss rate of the alignment layers 51 and 52 is 4% or less as described above, generation of H₂O in the alignment layers 51 and 52 is suppressed to such an extent that the deterioration in optical properties of the light control layer 20 is suppressed.

The thermal weight loss rate can be controlled by at least one of the material of the alignment layers 51 and 52 and the baking temperature.

By forming the alignment layers 51 and 52 containing the specific polymer compound, the thermal weight loss rate can be reduced. In this case, the alignment layers 51 and 52 are formed by baking a coating film containing the polyamic acid and the specific compound. At this time, imidization occurs in some of the repeating units of the polyamic acid, and in other repeating units, an epoxy group, a carbodiimide group or an oxazoline group contained in the specific compound reacts with a carboxyl group of the polyamic acid. As a result, even if the imidization ratio is low, the amount of remaining unreacted repeating units having a carboxyl group is reduced. Therefore, even when high temperature is applied to the produced light control sheet 10, generation of H₂O due to the dehydration reaction is suppressed, reducing the thermal weight loss rate of the alignment layers 51 and 52.

Further, increasing the baking temperature of the alignment layers 51 and 52 can increase the imidization ratio. This can reduce the number of unreacted repeating units in the polymer compound contained in the alignment layers 51 and 52. Therefore, even when high temperature is applied to the produced light control sheet 10, generation of H₂O is suppressed, reducing the thermal weight loss rate of the alignment layers 51 and 52. Specifically, the baking temperature of the alignment layers 51 and 52 is preferably 170°C or higher. Reducing the thermal weight loss rate by increasing the baking temperature is particularly advantageous when a material having high heat resistance is used for the transparent support layers 41 and 42.

When the specific compound is used as the material for the alignment layers 51 and 52, the thermal weight loss rate can be 4% or less even when the baking temperature of the alignment layers 51 and 52 is low. For example, the baking temperature may be 150°C or less. If the baking temperature is low, a material which is easily deformed by heat can be used for the transparent support layers 41 and 42, which increases the degree of freedom of the material for the transparent support layers 41 and 42.

On the other hand, if the baking temperature of the alignment layers 51 and 52 is high, the thermal weight loss rate can be 4% or less without using the specific compound as the material for the alignment layers 51 and 52. Therefore, the material cost of the alignment layers 51 and 52 can be reduced.

Further, by selecting the material for the transparent polymer layer so that the transparent polymer layer included in the light control layer 20 becomes a dense film, it is also possible to prevent impurities generated in the alignment layers 51 and 52 from entering the light control layer 20. By adopting such a configuration for the light control layer 20 of the present embodiment, it is possible to further suppress the deterioration in optical properties of the light control layer 20 caused by impurities. On the other hand, if the thermal weight loss rate of the alignment layers 51 and 52 is 4% or less, it is possible to suppress the deterioration in optical properties of the light control layer 20 caused by impurities regardless of the film state of the transparent polymer layer, thereby increasing the degree of freedom of the material for the transparent polymer layer.

Further, even when the material for the alignment layers 51 and 52 is different from the polymer compound generated from the polyamic acid, impurities in the alignment layers 51 and 52 can be suitably prevented from entering the light control layer 20 as long as the thermal weight loss rate of the alignment layers 51 and 52 is 4% or less. Therefore, deterioration in properties of the light control layer 20 can be suppressed.

### [Examples]

The above-mentioned light control sheet will be described by using specific examples and comparative examples.

### (Preparation of Polyamic Acid Solution)

### <Materials>

The diamine compounds and tetracarboxylic acid components used for the synthesis of the polyamic acid are described below.
· Diamine compound B1: 4,4'-diaminodiphenylmethane (manufactured by Tokyo Chemical Industry Co., Ltd.)
· Diamine compound B2: 3,5-diaminobenzoic acid (manufactured by Tokyo Chemical Industry Co., Ltd.)
· Tetracarboxylic dianhydride C1: 3-(carboxymethyl)-1,2,4-cyclopentanetricarboxylic acid 1,4:2,3-dianhydride (manufactured by Tokyo Chemical Industry Co., Ltd.)
· Tetracarboxylic dianhydride C2: 1,2,3,4-cyclobutanetetracarboxylic dianhydride (manufactured by Tokyo Chemical Industry Co., Ltd.)

### <Production Method>

In the first step, Diamine compounds B1 and B2 and Tetracarboxylic dianhydride C1 were mixed in the following ratio with N-ethyl-2-pyrrolidone (NEP) as a solvent, and reacted at 80°C for 5 hours to produce a first reaction solution. The description of each material in parts by weight below indicates the relative weight ratio of each material used in the first step and the second step.
B1: 10 parts by weight
B2: 8 parts by weight
C1: 4 parts by weight
NEP: 75 parts by weight

In the second step, Tetracarboxylic dianhydride C2 and NEP were added to the first reaction solution in the following ratio, and reacted at 40°C for 6 hours. Thus, a polyamic acid solution was obtained. The concentration of the resin solid content in the polyamic acid solution was 25 mass%.
C2: 16 parts by weight
NEP: 38 parts by weight

### (Production of Alignment Layer Coating Liquid)

The polyamic acid solution was used as the first component, and the first component, the second component, and NEP and butyl cellosolve as solvents were mixed in the following ratio, and stirred at 50°C for 24 hours to produce an alignment layer coating liquid as a coating liquid for forming an alignment layer. The description of each material in parts by weight below indicates the relative weight ratio of each material used in the formation of the alignment layer coating liquid.
First component (polyamic acid solution): 16 parts by weight
Second component: 1 part by weight
NEP: 36 parts by weight
Butyl cellosolve: 48 parts by weight

The compounds used as the second component are described below.
· Compound A1: Glycidyl acrylate (manufactured by Tokyo Chemical Industry Co., Ltd.)
· Compound A2: (3,4-epoxycyclohexyl) methyl acrylate (manufactured by Tokyo Chemical Industry Co., Ltd.)
· Compound A3: Epoxy group-containing acrylic polymer (Marproof G-0150M, manufactured by NOF Corporation)
· Compound A4: Oxazoline group-containing polystyrene (Epocros RPS-1005, manufactured by Nippon Shokubai Co., Ltd.)
· Compound A5: Carbodiimide group-containing polymer (Carbodilite V-02B, manufactured by Nisshinbo Chemical Inc.)
· Compound A6: Condensate of pentaerythritol and acrylic acid (Viscoat #300 manufactured by Osaka Organic Chemical Industry Ltd.)

Among the second components, Compounds A1, A2 and A3 have an epoxy group, Compound A4 has an oxazoline group, and Compound A5 has a carbodiimide group. That is, Compounds A1, A2, A3, A4 and A5 are specific compounds. Compound A6 has a hydroxyl group.

### (Production of Light Control Layer Coating Liquid)

A liquid crystal compound, a photopolymerizable compound, a photopolymerization initiator and a spacer were mixed to produce a light control layer coating liquid which is a coating liquid for forming a light control layer. Two types of coating liquids with different compositions were produced as the light control layer coating liquid. The details of the materials and the mixing ratio for each coating liquid are as follows. The description of each material in parts by weight below indicates the relative weight ratio of each material used in the formation of the light control layer coating liquid.

### <Coating Liquid I>

· Liquid crystal composition: Fluorine-based nematic mixed liquid crystal (MLC-6608, manufactured by Merck Ltd.) 50 parts by weight
· Photopolymerizable compound:
   Isobornyl acrylate (A-IB, manufactured by Osaka Organic Chemical Industry Ltd.) 36 parts by weight
   Ethoxylated trimethylolpropane triacrylate (AT-20, manufactured by Shin-Nakamura Chemical Co., Ltd.) 10 parts by weight
   Pentaerythritoltetrakis(3-mercaptobutyrate) (Karenz MT PE-1, manufactured by Showa Denko K.K.) 2 parts by weight
· Polymerization initiator: 1-hydroxycyclohexyl phenyl ketone (manufactured by IGM Resins B.V.) 1 part by weight
· Spacer: Spherical particles made of divinylbenzene (manufactured by Sekisui Kasei Co., Ltd., particle size 10 µm) 1 part by weight

The liquid crystal composition was a nematic liquid crystal and contained two types of liquid crystal compounds having negative dielectric anisotropy. The refractive index anisotropy Δn in the mixture of the two types of liquid crystal compounds was 0.20.

### <Coating Liquid II>

· Liquid crystal composition: Fluorine-based nematic mixed liquid crystal (MLC-6608, manufactured by Merck Ltd.) 50 parts by weight
· Photopolymerizable compound:
   Isobornyl acrylate (A-IB, manufactured by Osaka Organic Chemical Industry Ltd.) 36 parts by weight
   Pentaerythritol tetraacrylate (A-TMMT, manufactured by Shin-Nakamura Chemical Co., Ltd.) 5 parts by weight
   Ethoxy polyethylene glycol acrylate (Light acrylate 14EGA, manufactured by Kyoeisha Chemical Co., Ltd.) 5 parts by weight
   Pentaerythritoltetrakis(3-mercaptobutyrate) (Karenz MT PE-1, manufactured by Showa Denko K.K.) 2 parts by weight
· Polymerization initiator: 1-hydroxycyclohexyl phenyl ketone (manufactured by IGM Resins B.V.) 1 part by weight
· Spacer: Spherical particles made of divinylbenzene (manufactured by Sekisui Kasei Co., Ltd., particle size 10 µm) 1 part by weight

The liquid crystal composition was a nematic liquid crystal and contained two types of liquid crystal compounds having negative dielectric anisotropy. The refractive index anisotropy Δn in the mixture of the two types of liquid crystal compounds was 0.20.

### (Formation of Light Control Sheet)

A first transparent electrode layer was formed by sputtering on a first transparent support layer to prepare a laminate of the first transparent support layer and the first transparent electrode layer as a first sheet. Similarly, a second transparent electrode layer was formed by sputtering on a second transparent support layer to prepare a laminate of the second transparent support layer and the second transparent electrode layer as a second sheet. Each of the first transparent support layer and the second transparent support layer was made of polyethylene terephthalate and had a thickness of 125 µm. Each of the first transparent electrode layer and the second transparent electrode layer was made of indium tin oxide and had a thickness of 30 nm.

Next, each of the transparent electrode layers of the first sheet and the second sheet was coated with the alignment layer coating liquid using a bar coater to form a coating film. Then, the coating film was baked by heating and drying for 4 minutes to form an alignment layer. Each alignment layer had a thickness of 100 nm.

Next, the light control layer coating liquid was dropped onto the alignment layer of the first sheet to obtain a laminate in which the first sheet and the second sheet were bonded together such that the coating film made of the light control layer coating liquid was sandwiched between the alignment layers of the first sheet and the second sheet. The coating film had a thickness of 10 µm. The first transparent support layer of the laminate was irradiated with ultraviolet light at 365 nm to form a light control layer, thereby obtaining a light control sheet. The intensity of the ultraviolet light was 8 mW/cm², and the irradiation time of the ultraviolet light was 120 seconds.

### (Configurations of Examples, Comparative Examples, and Reference Example)

Light control sheets of Examples 1 to 8, Comparative examples 1 and 2, and a reference example were obtained by using the above-mentioned materials and steps, while changing at least one of the presence or absence of the second component in the alignment layer coating liquid, the compound used as the second component, the coating liquid used as the light control layer coating liquid, and the baking temperature of the alignment layer.

### (Evaluations)

### <Thermal Weight Loss Rate>

The alignment layer was cut out from the light control sheet with a clean cutter, and the thermal weight loss rate was measured when the alignment layer was heated at 130°C for 30 minutes in a nitrogen atmosphere. The thermal weight loss rate was measured using a differential thermal and thermogravimetric analyzer (STA7200RV, manufactured by Hitachi High-Tech Science Corporation), and the sample was weighed in an aluminum cell.

### <Haze>

The haze of the light control sheet in the transparent state was measured before and after the heat resistance test. The transparent state is a state in which no AC voltage is applied between the transparent electrode layers of the light control sheet, that is, a state in which no potential difference occurs between the transparent electrode layers. The haze was measured in accordance with JIS K 7136:2000. In the heat resistance test, the light control sheet was heated in an oven at 130°C for 30 minutes.

In the haze evaluation, the case where the haze was less than 10% was rated as good "S", and the case where the haze was 10% or greater was rated as poor "F".

### (Evaluation Results)

Table 1 shows the presence or absence of the second component in the alignment layer coating liquid, the compound used as the second component, the coating liquid used as the light control layer coating liquid, the baking temperature of the alignment layer, and the results of each of the above evaluation categories for the examples, comparative examples and reference example.

**[Table 1]**

| | Alignment layer coating liquid | | Light control layer coating liquid | Baking temperature (°C) | Thermal weight loss rate (%) | Haze (%) | | | |
|---|---|---|---|---|---|---|---|---|---|
| | First componen t | Second componen t | | | | Initial | | After heat resistance test | |
| Ex.1 | Polyamic acid | A1 | I | 120 | 1.94 | 5.5 | S | 5.9 | S |
| Ex.2 | Polyamic acid | A2 | I | 120 | 2.34 | 5.6 | S | 6.2 | S |
| Ex.3 | Polyamic acid | A3 | I | 120 | 3.19 | 6.2 | S | 8.0 | S |
| Ex.4 | Polyamic acid | A4 | I | 120 | 3.12 | 6.3 | S | 7.9 | S |
| Ex.5 | Polyamic acid | A5 | I | 120 | 3.30 | 6.3 | S | 8.4 | S |
| Ex.6 | Polyamic acid | A1 | II | 120 | 1.94 | 5.5 | S | 5.6 | S |
| Ex.7 | Polyamic acid | - | I | 170 | 3.90 | 4.9 | S | 9.7 | S |
| Ex.8 | Polyamic acid | - | I | 190 | 3.00 | 5.1 | S | 7.5 | S |
| Comp.Ex. 1 | Polyamic acid | - | I | 120 | 4.21 | 4.9 | S | 12.0 | F |
| Comp.Ex. 2 | Polyamic acid | A6 | I | 120 | 4.40 | 5.5 | S | 13.0 | F |
| Ref.Ex.1 | Polyamic acid | - | II | 120 | 4.21 | 5.0 | S | 7.0 | S |

As shown in Table 1, in Examples 1 to 8, in which the thermal weight loss rate of the alignment layer was 4% or less, the haze of the light control sheet in the transparent state after the heat resistance test was less than 10%, and the difference from the initial haze, that is, from the haze before the heat resistance test, was also small. Therefore, in Examples 1 to 8, deterioration in optical properties due to high-temperature heating was suppressed, and good optical properties are achieved even after the heat resistance test.

On the other hand, in Comparative examples 1 and 2, in which the thermal weight loss rate of the alignment layer exceeds 4%, the haze of the light control sheet in the transparent state after the heat resistance test increased to the extent of exceeding 10%, and the deterioration in optical properties due to high-temperature heating was significant.

In Examples 1 to 6 among Examples 1 to 8 and Comparative examples 1 and 2, a specific compound was added as the second component to the alignment layer coating liquid. On the other hand, in Comparative example 1, the second component was not added to the alignment layer coating liquid, and in Comparative example 2, a compound different from the specific compound was added as the second component to the alignment layer coating liquid. The baking temperatures of the alignment layers in Examples 1 to 6 and Comparative examples 1 and 2 were all the same low temperature. Therefore, it is suggested that the addition of the specific compound to the alignment layer coating liquid can reduce the thermal weight loss rate.

Further, in Examples 7 and 8, no specific compound was added to the alignment layer coating liquid, but the baking temperature of the alignment layer was as high as 170°C or higher. Therefore, it is suggested that the increase in baking temperature can also reduce the thermal weight loss rate.

In the reference example, no specific compound was added to the alignment layer coating liquid, the baking temperature was low, and the thermal weight loss rate of the alignment layer exceeded 4%, but the deterioration in optical properties due to high-temperature heating was suppressed. The light control layer coating liquid used in the reference example contains a monomer having a small double bond equivalent, whereby the transparent polymer layer of the light control layer was densely formed, and as a result, even if impurities were generated in the alignment layer by high-temperature heating, the impurities were prevented from entering the light control layer.

As in Example 6, when the thermal weight loss rate of the alignment layer was 4% or less and the light control layer coating liquid contains a monomer having a small double bond equivalent, the deterioration in optical properties due to high-temperature heating can be further suppressed. On the other hand, as in Examples 1 to 5, 7 and 8, even when the density of the transparent polymer layer of the light control layer was not high, the deterioration in optical properties due to high-temperature heating can be sufficiently suppressed as long as the thermal weight loss rate of the alignment layer was 4% or less, thereby enabling high degree of freedom of the material for the light control layer.

As described above in the embodiments and examples, according to the light control sheet, the following effects can be achieved.
(1) The alignment layer has a thermal weight loss rate of 4% or less when heated at 130°C for 30 minutes. Accordingly, even when high temperature is applied to the light control sheet, it is possible to suppress generation of impurities in the alignment layer, thereby preventing deterioration in properties due to impurities entering the light control layer.
(2) When the alignment layer contains a polymer compound having a skeleton composed of polyimide or a polyimide precursor, the alignment layer can suitably achieve a function of controlling the alignment of the liquid crystal compound.
(3) The polymer compound included in the alignment layer includes a structure produced by reacting a polyamic acid with a compound having at least one functional group selected from the group consisting of an epoxy group, a carbodiimide group and an oxazoline group. Further, the alignment layer contains a compound having at least one functional group selected from the group consisting of an epoxy group, a carbodiimide group and oxazoline group.
   According to the above configuration, the polymer compound is prevented from containing unreacted polyamic acid structure having a carboxyl group. Therefore, the generation of water as impurity due to dehydration reaction during high-temperature heating can be suppressed. Accordingly, the alignment layer with a thermal weight loss rate of 4% or less can be reliably provided.
(4) The specific compound having an epoxy group includes at least one selected from the group consisting of glycidyl acrylate, glycidyl methacrylate, (3,4-epoxycyclohexyl) methyl acrylate, allyl glycidyl ether, 1,2-epoxy-5-hexene, 1,2-epoxy-9-decene, vinylethylene oxide, 4-vinyl-1,2-epoxycyclohexane, and a copolymer containing glycidyl methacrylate. According to the above configuration, the alignment layer with a thermal weight loss rate of 4% or less can be reliably provided.
(5) The specific compound having an oxazoline group includes at least one selected from the group consisting of 2-alkyl-2-oxazoline, 2-phenyl-2-oxazoline, 2,2'-bis(2-oxazoline), 2,2'-(1,4-phenylene)bis(2-oxazoline), and a copolymer of oxazoline-containing monomer. According to the above configuration, the alignment layer with a thermal weight loss rate of 4% or less can be reliably provided.
(6) The specific compound having a carbodiimide group includes at least one selected from the group consisting of N,N'-diisopropylcarbodiimide, N,N'-dicyclohexylcarbodiimide, N,N'-di-tert-butylcarbodiimide, 1-(3-dimethylaminopropyl)-3-ethylcarbodiimide, and a condensed polymer of diisocyanate. According to the above configuration, the alignment layer with a thermal weight loss rate of 4% or less can be reliably provided.
(7) The baking temperature of the alignment layer is set to a high temperature so that the thermal weight loss rate is 4% or less. Accordingly, the alignment layer with a thermal weight loss rate of 4% or less can be reliably provided.
(8) The alignment layer is formed by baking a coating film containing a polyamic acid and a specific compound, and the baking temperature is 150°C or less. Accordingly, since the baking temperature is low, a material which is easily deformed by heat can be used for the transparent support layer while suppressing generation of impurities in the alignment layer. Therefore, the degree of freedom of the material for the transparent support layer can be increased.

## Claims

1. A light control sheet comprising:
a light control layer containing a liquid crystal composition;
a pair of alignment layers sandwiching the light control layer; and
a pair of transparent electrode layers sandwiching the light control layer and the pair of alignment layers, wherein
the alignment layers have a thermal weight loss rate of 4% or less when the alignment layers are heated at 130°C for 30 minutes.

2. The light control sheet according to claim 1, wherein
the alignment layers contain a polymer compound having a skeleton composed of polyimide or a polyimide precursor, and the skeleton composed of the polyimide precursor has a structure represented by the following general formula (2): 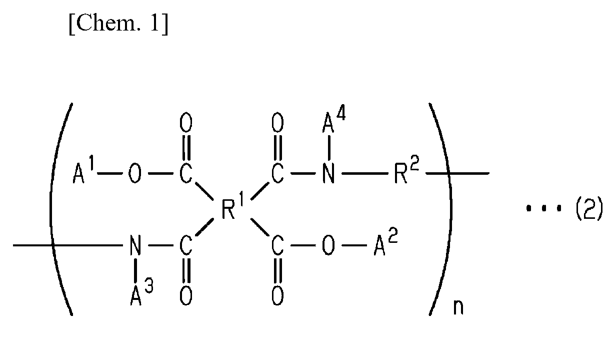
in the above general formula (2), R¹ represents a tetravalent organic group, R² represents a divalent organic group, A¹ and A² each independently represent a hydrogen atom or an alkyl group having 1 to 8 carbon atoms, A³ and A⁴ each independently represent any of a hydrogen atom, an alkyl group having 1 to 5 carbon atoms and an acetyl group having 1 to 5 carbon atoms, and n represents a positive integer.

3. The light control sheet according to claim 2, wherein
the polymer compound includes a structure produced by reacting a polyamic acid with a specific compound which is a compound having at least one functional group selected from the group consisting of an epoxy group, a carbodiimide group and an oxazoline group.

4. The light control sheet according to claim 3, wherein
the specific compound having the epoxy group includes at least one selected from the group consisting of glycidyl acrylate, glycidyl methacrylate, (3,4-epoxycyclohexyl) methyl acrylate, allyl glycidyl ether, 1,2-epoxy-5-hexene, 1,2-epoxy-9-decene, vinylethylene oxide, 4-vinyl-1,2-epoxycyclohexane, and a copolymer containing glycidyl methacrylate.

5. The light control sheet according to claim 3, wherein
the specific compound having the oxazoline group includes at least one selected from the group consisting of 2-alkyl-2-oxazoline, 2-phenyl-2-oxazoline, 2,2'-bis(2-oxazoline), 2,2'-(1,4-phenylene)bis(2-oxazoline), and a copolymer of oxazoline-containing monomer.

6. The light control sheet according to claim 3, wherein
the specific compound having the carbodiimide group includes at least one selected from the group consisting of N,N'-diisopropylcarbodiimide, N,N'-dicyclohexylcarbodiimide, N,N'-di-tert-butylcarbodiimide, 1-(3-dimethylaminopropyl)-3-ethylcarbodiimide, and a condensed polymer of diisocyanate.

7. The light control sheet according to claim 2, wherein
the alignment layers include a specific compound which is a compound having at least one functional group selected from the group consisting of an epoxy group, a carbodiimide group and an oxazoline group.

8. The light control sheet according to claim 7, wherein
the specific compound having the epoxy group includes at least one selected from the group consisting of glycidyl acrylate, glycidyl methacrylate, (3,4-epoxycyclohexyl) methyl acrylate, allyl glycidyl ether, 1,2-epoxy-5-hexene, 1,2-epoxy-9-decene, vinylethylene oxide, 4-vinyl-1,2-epoxycyclohexane, and a copolymer containing glycidyl methacrylate.

9. The light control sheet according to claim 7, wherein
the specific compound having the oxazoline group includes at least one selected from the group consisting of 2-alkyl-2-oxazoline, 2-phenyl-2-oxazoline, 2,2'-bis(2-oxazoline), 2,2'-(1,4-phenylene)bis(2-oxazoline), and a copolymer of oxazoline-containing monomer.

10. The light control sheet according to claim 7, wherein
the specific compound having the carbodiimide group includes at least one selected from the group consisting of N,N'-diisopropylcarbodiimide, N,N'-dicyclohexylcarbodiimide, N,N'-di-tert-butylcarbodiimide, 1-(3-dimethylaminopropyl)-3-ethylcarbodiimide, and a condensed polymer of diisocyanate.

11. The light control sheet according to claim 1, wherein
the light control layer includes a transparent polymer layer including a plurality of voids,
the liquid crystal composition fills the voids, and
a ratio of the transparent polymer layer to the transparent polymer layer and the liquid crystal composition is 20 mass% or greater and 80 mass% or less.

12. A light control device comprising:
the light control sheet according to any one of claims 1 to 11; and
a control unit that controls application of a driving voltage to the light control sheet, wherein
a haze of the light control sheet is changed by application of the driving voltage.

13. A method of producing a light control sheet, the method comprising:
forming a first alignment layer on a first transparent electrode layer supported by a first transparent support layer;
forming a second alignment layer on a second transparent electrode layer supported by a second transparent support layer; and
forming a light control layer containing a liquid crystal composition between the first alignment layer and the second alignment layer, wherein
the first alignment layer and the second alignment layer are formed so as to have a thermal weight loss rate of 4% or less when the alignment layers are heated at 130°C for 30 minutes.

14. The method of producing a light control sheet according to claim 13, wherein
the forming the first alignment layer and the forming the second alignment layer include forming the respective alignment layers by baking a coating film, and
the baking is performed at a temperature at which the thermal weight loss rate becomes 4% or less.

15. The method of producing a light control sheet according to claim 13, wherein
the forming the first alignment layer and the forming the second alignment layer include forming the respective alignment layers by baking a coating film containing a polyamic acid and a compound having at least one functional group selected from the group consisting of an epoxy group, a carbodiimide group and oxazoline group, and
the baking is performed at a temperature of 150°C or less.
